# EUROPEAN PATENT APPLICATION

(11) **EP 2 919 445 A1**
(43) Date of publication of application: **16.09.2015**
(21) Application number: 15158440.6
(22) Date of filing: 10.03.2015
(51) Int. Cl.: H04M 1/67, H04M 1/673, H04M 1/725, H04W 52/02

(54) **Activation of an electronic device with a capacitive keyboard**

(30) Priority: 10.03.2014 US 201414202663
(71) Applicant: BlackBerry Limited, Waterloo, ON N2K 0A7 (CA)
(72) Inventor: McKenzie, Donald Somerset McCulloch, Waterloo, Ontario N2K 0A7 (CA); Defazio, Michael Joseph, Waterloo, Ontario N2K 0A7 (CA); Hofer, Joseph Michael, Waterloo, Ontario N2K 0A7 (CA)
(74) Representative: Finnie, Peter John

(57) **Abstract**

A portable electronic device is provided. The portable electronic device includes a memory storing instructions. The portable electronic device also includes a processor executing the instructions to perform a plurality of operations. The operations may include detecting a key pressing action associated with a component of the portable electronic device. The operations may also include determining that the key pressing action reflects a request to activate the portable electronic device based on a measurement of an area associated with the key pressing action being less than or equal to a predetermined threshold area measurement. The operations may further include activating the portable electronic device based on the determination.

## Description

### FIELD OF TECHNOLOGY

The present disclosure relates to electronic devices including, but not limited to, portable electronic devices and their controls.

### BACKGROUND

Electronic devices, including portable electronic devices, have gained widespread use. Portable electronic devices include several types of devices such as cellular telephones (mobile phones), smart telephones (smart phones), Personal Digital Assistants (PDAs), tablet computers, or laptop computers, with wireless Network communications connectivity, or near-field communications connectivity, such as Bluetooth® capabilities or other electro-magnetic field communication capabilities.

Portable electronic devices are often configured to enter a low-power mode or state, e.g., a sleep state, when not in use. A user may activate, also referred to as waking up, an electronic device from a low power mode, by actuating a specific key or button of the electronic device. An accidental movement of the electronic device by a user may often unintentionally wake up the device. This increases power consumption of the device, and sometimes, causes the device to perform operations the user does not intend to be performed. For example, cell phone calls can be unknowingly made while the cell phone is in a user's pocket or handbag. Improvements in activation of electronic devices that avoid unintentional activation of the devices by accidental movements are desired.

### BRIEF DESCRIPTION OF THE DRAWINGS

Embodiments of the present disclosure will now be described, by way of example only, with reference to the attached Figures, wherein:
Fig. 1 shows an example of a portable electronic device, in accordance with the present disclosure;
Fig. 2 shows a block diagram of the portable electronic device shown in Fig. 1, in accordance with the present disclosure;
Fig. 3 shows an example process for activating the portable electronic device, in accordance with the present disclosure;
Fig. 4 shows an example process for activating the portable electronic device and unlocking the portable electronic device, in accordance with the present disclosure;
Fig. 5 shows an example process for activating the portable electronic device and performing a predetermined function, in accordance with the present disclosure; and
Fig. 6 shows an example process for determining whether a key pressing action reflects a request to activate the portable electronic device, in accordance with the present disclosure.

### DETAILED DESCRIPTION

Reference will now be made in detail to the disclosed example embodiments, which are illustrated in the accompanying drawings. Wherever possible, the same reference numbers will be used throughout the drawings to refer to the same or like parts.

The present disclosure generally relates to an electronic device, such as a portable electronic device. Examples of portable electronic devices include wireless communication devices such as cellular telephones (mobile phones), smart telephones (smart phones), pagers, PDAs, tablet computers, laptop computers, notebook computers, netbook computers, and so forth, with wireless communications capabilities, such as wireless cellular communications capabilities. The portable electronic device may also be a portable electronic device without wireless communications capabilities. Examples include handheld electronic game devices, digital photograph albums, digital cameras, gaming consoles, GPS devices, portable fitness devices, or similar devices.

Portable electronic devices often include various types of sensors, such as, for example, force sensors, GPS sensors, acceleration sensors, touch-sensitive sensors, and radio-frequency sensors, etc. Touch-sensitive sensors may include capacitive touch sensors, which may be associated with various components of the portable electronic devices, such as, for example, screen display, keyboard, microphone, speakerphone, buttons, etc. For example, a capacitive touch sensor may be disposed under a key or a button, which may be physical or virtual. The capacitive touch sensors may detect the presence of a key pressing action performed by a user's finger when the finger presses the key or button. The capacitive touch sensors may be programmable to distinguish between the key pressing actions conducted by a single finger and the key pressing actions conducted by a large object, such as an object located in a purse. The capacitive touch sensors may also be calibrated with different sensitivities to generate different signals representing and distinguishing different gestures (e.g., hovering, touching, pressing, or swiping gestures).

Although this specification refers to keys (which may be physical or virtual) of a keyboard (which may be physical or virtual) as examples, it is understood that the key pressing action or other actions or gestures may also be associated with other components, such as a button (physical or virtual) provided on the portable electronic device. Capacitive touch sensors may be associated with the button, and may be used to detect the key pressing action or other gestures associated with the button. Capacitive touch sensors may also be programmed to detect whether the different gestures associated with the button are performed by a user's finger or other objects. Embodiments consistent with the present disclosure seek to activate the portable electronic device from a low power mode when the key pressing action or other gestures associated with the key or button are performed by a user's finger with an intention to activate or request activation of the portable electronic device.

In addition, capacitive touch sensors may be associated with a surface area on the housing of the portable electronic device. A user's finger or other objects may hover above/around, touch, press, or swipe around a surface area, and the capacitive touch sensors may be used to detect the different gestures and determine whether the different gestures are performed by a user's finger or other objects. The above and below discussions relating to keys or buttons may also be applied to the surface areas. Moreover, in the above discussions and below discussions, when a user's finger is referred to, it is understood that the user's finger may be a bare finger, or may be covered by a glove, a piece of cloth, rubber, or other material or device that is suitable for operating various components of the portable electronic device. In the above and below discussions, the user's finger may also be functionally replaced by other devices, such as a stylus or electronic pen.

Portable electronic devices often include multiple applications ("apps") to provide various services and functions. For example, a user may have to find and launch an app in order to view the content of the app or use the app. Moreover, when the portable electronic device is under a low power mode, e.g., a sleep state, the user may need to activate the portable electronic device first before the user can view any content in the app (e.g., new messages received by an email app). Embodiments consistent with the present disclosure seek to assist the user by activating the portable electronic device and launching an app, simultaneously or sequentially, upon detection of a key pressing action or other gesture performed on a specific key or other component of the portable electronic device, thereby enabling the user to activate the portable electronic device and view content of an app without actually launching or opening the app. For example, a user may press a certain key, such as the "M" key, to both activate the portable electronic device and open the email inbox without actually selecting and launching the email app while the portable electronic device is in a sleep state. For another example, a user may press a certain key, such as the "F" key, to both activate the portable electronic device and turn on the flashlight in one action while the portable electronic device is in a sleep state. The user may also perform gestures other than the key pressing action to activate the device and to launch a certain app. For example, a user may double tap a button of the portable electronic device to activate the portable electronic device from a sleep state.

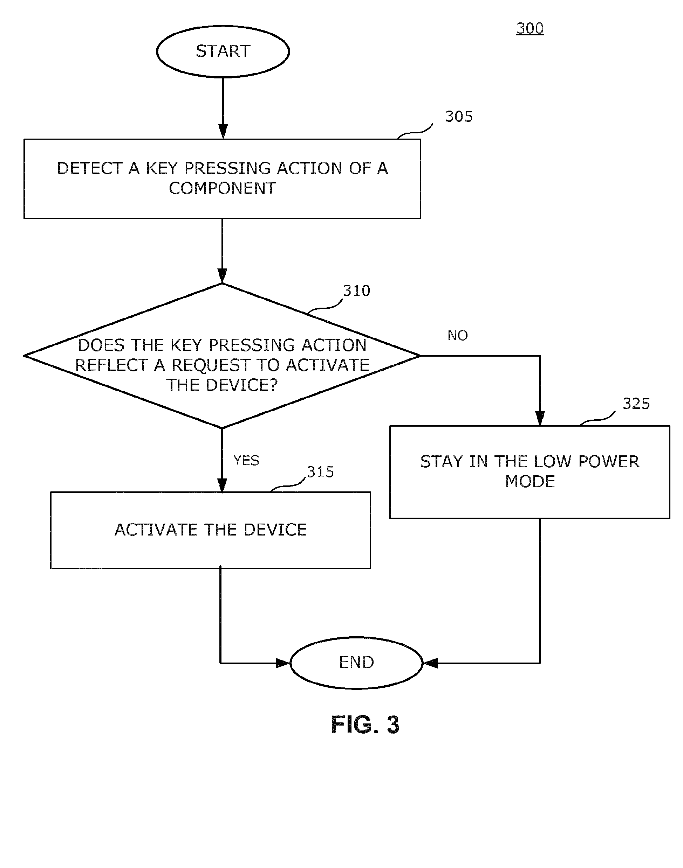

It should be noted that although the Figures, such as Figs. 3-5 are described in connection with a key pressing action for activating the portable electronic device, other actions, e.g., tapping, double tapping, or swiping actions, may be used, in place of or in conjunction with, the key pressing action to activate the portable electronic device from the low power mode, without departing from the scope of the present disclosure. A "tapping" action generally means that the user finger contacts (i.e., taps, or touches) the key but does not apply a sufficient force to constitute pressing the key. In other words, the force (if any) exerted by the touching action is smaller than a pre-set threshold force that is required to constitute pressing. A "double tapping" action generally means that the user taps the same key twice within a predetermined period of time. A swiping action generally means that while the user's finger touches or hovers above/around a key, the user's finger also slide in a predetermined direction while the touching or hovering gesture is maintained. For example, the predetermined direction may be any direction away from the key, or around the key.

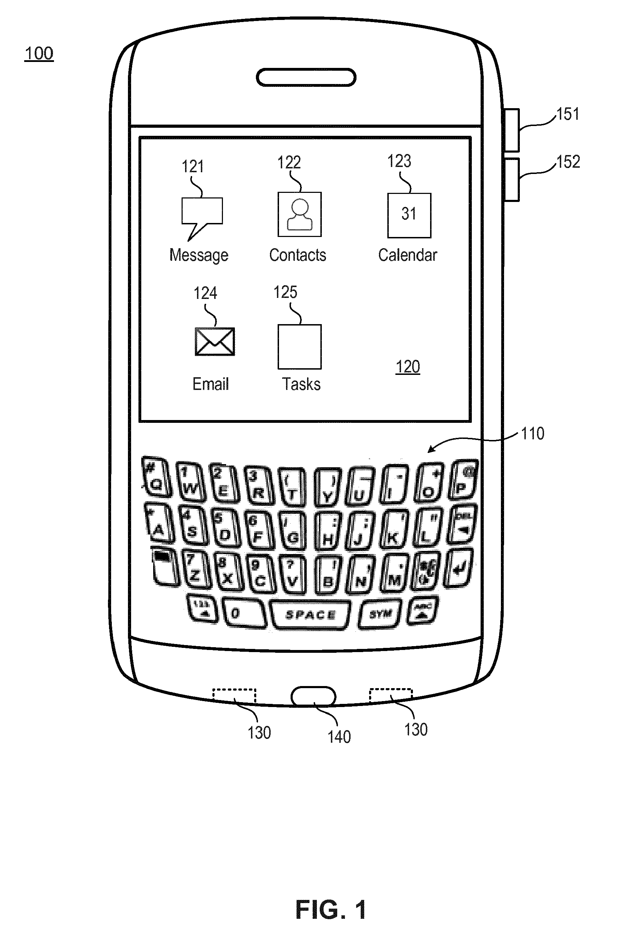

Fig. 1 shows an example of a portable electronic device 100 consistent with the present disclosure. The portable electronic device 100 may include a keyboard 110. The keyboard 110 may be any suitable layout, such as QWERTY, QWERTZ, AZERTY, Dvorak, or the like. The keyboard 110 may be a reduced keyboard having two or more characters associated with certain keys, such as a reduced QWERTY keyboard layout. For example, a reduced QWERTY keyboard may be provided in which the letters Q and W share a single key, the letters E and R share a single key, and so forth. The keyboard 110 may be a physical keyboard, in which each individual key is a physical key. The keyboard 110 may also be a virtual keyboard displayed on display screen 120, in which each individual key is a virtual key. The display screen 120 may be any suitable type of display screen. In one embodiment, the display screen 120 may include a touch-sensitive display.

The display screen 120 may display a graphical user interface with various icons (or logos, pictures) corresponding to various apps installed in the portable electronic device 100. For example, the portable electronic device 100 may include a message app 121, a contacts app 122, a calendar app 123, an email app 124, and a tasks app 125. The display screen 120 may display icons representing these apps and other functions provided by the portable electronic device 100. For example, although not shown, the display screen 120 may display icons representing a map app, a Web browser app, a word processing app, a game app, and so forth.

The portable electronic device 100 may include other physical components, such as a first volume adjusting button 151, a second volume adjusting button 152, a speaker 130, and a microphone 140. It is understood the portable electronic device 100 may include additional components not shown in Fig. 1, and may not include all of the exemplary components shown in Fig. 1.

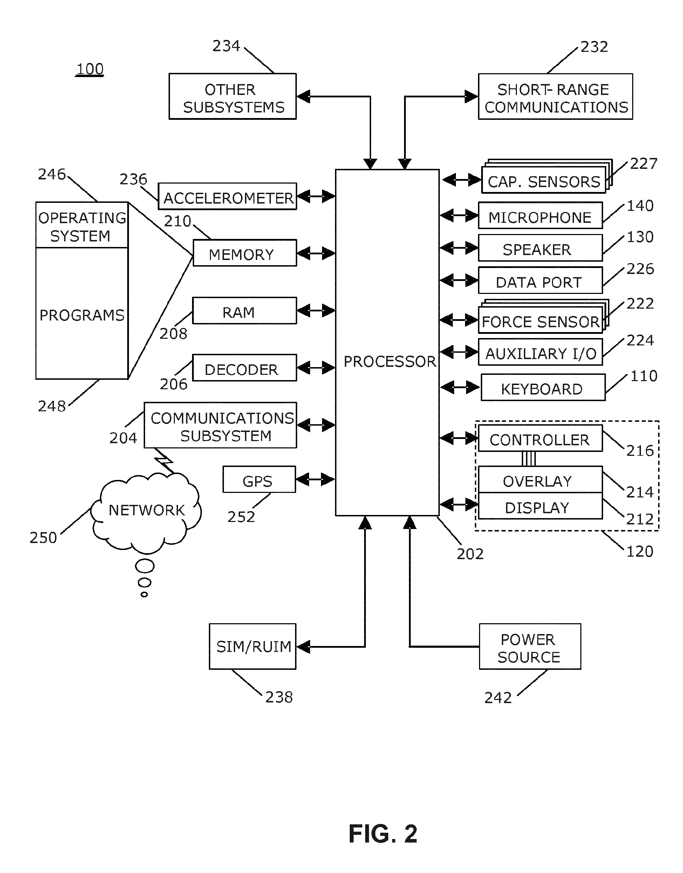

Fig. 2 shows a block diagram of the portable electronic device 100 shown in Fig. 1, consistent with the present disclosure. The block diagram shows software and hardware components that may be included in or associated with the portable electronic device 100 during operation. It is understood the portable electronic device 100 includes additional components not shown in Fig. 2, and may not include all of the example components shown in Fig. 2. The portable electronic device 100 includes a processor 202, that controls operations of portable electronic device 100. The portable electronic device 100 may include a communications subsystem 204 and a short-range communications 232 module to perform various communication functions, including data and voice communications. Data received by the portable electronic device 100 may be decompressed and decrypted by a decoder 206. The communications subsystem 204 may receive messages from and may send messages to a network 250. The network 250 may be any type of network, including, but not limited to, data wireless networks, voice wireless networks, and networks that support both voice and data communications. The network 250 may be wired or wireless. The portable electronic device 100 may include a power source 242, such as one or more rechargeable batteries or a port to an external power supply, which may supply power to various components of the portable electronic device 100.

The processor 202 is coupled to and interacts with a Random Access Memory (RAM) 208, a memory 210, or the display screen 120. The RAM 208 and the memory 210 may be any suitable type of memory, for example, a non-transitory flash memory. RAM 208 and memory 210 may store computer instructions or codes that may be executable by the processor 202 to perform various functions, methods, processes, or operations discussed in the present disclosure.

The display screen 120 may include a display 212, which may be a touch-sensitive display. In the example embodiment of Fig. 2, the display 212 is coupled to a touch-sensitive overlay 214 and an electronic controller 216. The processor 202 may also be coupled to one or more force sensors 222, a Global Positioning System sensor or antenna(GPS) 252, an auxiliary input/output (I/O) subsystem 224, a data port 226, the speaker 130, the microphone 140, the keyboard 110, and other device subsystems 234.

User-interaction with a graphical user interface (GUI) may be performed through the touch-sensitive overlay 214. The processor 202 may interact with the touch-sensitive overlay 214 via the electronic controller 216. Information, such as text, characters, symbols, images, icons, and other items that may be displayed or rendered on the display screen 120 via the processor 202. The processor 202 may interact with an accelerometer 236 to detect an acceleration caused by, for example, a shake of the portable electronic device 100. The processor 202 may interact with the GPS 252 in order to determine the geographical location or moving speed of the portable electronic device 100.

To identify a subscriber for network access, the portable electronic device 100 may use a Subscriber Identity Module or a Removable User Identity Module (SIM/RUIM) card 238 for communication with a network, such as the network 250, which may be wireless. Alternatively or additionally, user identification information may be programmed into memory 210 or RAM 208.

The portable electronic device 100 includes an operating system 246 and software programs 248 that may be executed by the processor 202. The operating system 246 and software programs or components 248 contain computer codes or instructions that may be executed by the processor 202, and may be stored in a persistent, updatable storage device, such as the memory 210. Additional applications or programs may be loaded onto the portable electronic device 100 through the network 250, the auxiliary I/O subsystem 224, the data port 226, the short-range communications subsystem 232, or any other suitable subsystem 234. The software programs or components 248 may include instructions executable by the processor 202 for performing various processes or methods disclosed in the present disclosure.

A received signal, such as a text message, an email message, or web page download, may be processed by the communications subsystem 204 and input to the processor 202. The processor 202 may process the received signal for output to the display 212 and/or to the auxiliary I/O subsystem 224. A subscriber may generate data items, for example email messages, which may be transmitted over the network 250 (which may be wireless) through the communications subsystem 204, for example.

The portable electronic device 100 may further include a plurality of capacitive touch sensors (or capacitive sensors) 227. The capacitive touch sensors 227 may be associated with various other components of the portable electronic device 100, such as keys on the keyboard 110, the microphone 140, the speaker 130, the data port 226, the volume adjusting buttons 151 and 152, other buttons or surface areas provided on the portable electronic device 100. When the user's finger, a stylus or electronic pen hovers above/around a key or any other component, touches the key or any other component, presses the key or any other component, or swipes around the key or any other component, the capacitive touch sensors associated with the key or the any other component may generate signals corresponding to the different gestures of hovering, touching, pressing, or swiping. The processor 202 may determine the type of gestures based on the signals received from the capacitive touch sensors. For example, in one embodiment, the portable electronic device 100 may include a plurality of capacitive touch sensors 227 disposed under each physical key of the physical keyboard 110. When a user's finger hovers above/around a key, touches a key, presses a key, or swipes around a key, the capacitive touch sensor associated with the key may generate a corresponding signal, which may be processed by the processor 202 to determine the type of gesture (i.e., hovering, touching, pressing, or swiping). For another example, in one embodiment, when a large object crushes onto the physical keyboard 110, the capacitive touch sensors 227 may generate a corresponding signal representing a large area of the keyboard being pressed upon.

The portable electronic device 100 may be configured to enter a low-power mode or state, e.g., a sleep state, when it is not used by a user for a certain period of time. For example, in a low-power mode, the display screen 120 may not be illuminated, and one or more hardware may be powered-down or operated at a lower speed to conserve power. In some embodiments, the capacitive touch sensors 227 may be disabled while the portable electronic device 100 is in the sleep mode. A user may activate the portable electronic device 100 by performing a key pressing action or other gestures on a key or button of the portable electronic device 100. In some embodiments, the capacitive touch sensors 227 may be activated, for example, waken up, upon detecting physical force or action exerted upon one or more keys or buttons of the portable electronic device 100. For example, the capacitive touch sensors 227 may be activated to detect a measurement of the area, for example, a size of the area, that the physical force or action exerts upon. The processor 202 may determine whether the physical force or action exerted upon the one or more keys or buttons of the portable electronic device 100 is performed by a user's single finger or by a large object based on the measurement of the area that the physical force or action exerts upon. If the key action is determined to be performed by a user's single finger, the processor 202 may activate the portable electronic device 100 from the sleep state. On the other hand, if the key action is determined to be performed by a large object, the processor 202 may not activate the portable electronic device 100 from the sleep state.

Fig. 3 is a flowchart showing an example process 300 for activating the portable electronic device 100 from a low power mode consistent with the present disclosure. Process 300 may start with detecting a key pressing action associated with a component of the portable electronic device 100 (Step 305). In some embodiments, the component of the portable electronic device 100 may be any key on the keyboard 110 (e.g., key "P" on the keyboard 110 or any other key on the keyboard 110 may be used). The component of the portable electronic device 100 may be any other suitable physical component provided on the portable electronic device 100. For example, in some embodiments, one or both of the first and second volume adjusting buttons 151 and 152 may be used for activating the portable electronic device 100. In some embodiments, the "MENU" key, the "Enter" key, or the keys used to accept or reject phone calls may also be used to activate the portable electronic device from the low power mode. In some embodiments, a key pressing action of any key on the keyboard 110 may trigger the activation of the portable electronic device 100. In other embodiments, a key pressing action of a specified key on the keyboard 110 may trigger the activation of the portable electronic device 100, while a key pressing action of other keys on the keyboard 110 may not trigger the activation of the portable electronic device 100.

In some embodiments, a key pressing action may be detected when one or more of the force sensors 222 sense that the key is pressed with a force that is greater than a preset threshold force. In some embodiments, a key pressing action may be detected when a depression of one of the plurality of keys to an extent that is sufficient to engage the physical or electronic dome switch associated with that key.

The processor 202 may determine, based on a measurement of an area, for example, a size of an area associated with the detected key pressing action of a component of the portable electronic device, whether the key pressing action reflects a request to activate the portable electronic device (Step 310). For example, the processor 202 may determine whether a measurement of an area associated with the key pressing action of the component, such as the key "P" or any other key on the keyboard 110, or any other buttons, including the first and second volume adjusting buttons 151 and 152, is greater than a predetermined threshold area measurement, based on signals provided by the capacitive sensors 227. If the measurement of the area associated with the key pressing action is less than or equal to a predetermined threshold area measurement, the processor 202 may determine that the key pressing action reflects a request to activate the portable electronic device 100.

For another example, the processor 202 may determine whether the component, such as the key "P" or any other key on the keyboard 110, or any other buttons, including the first and second volume adjusting buttons 151 and 152, has been pressed and held for a predetermined time period (e.g., one second), based on signals provided by the capacitive sensors 227 and/or the force sensors 222. If the component has been pressed and held for a predetermined time period, the processor 202 may determine that the key pressing action reflects a request to activate the portable electronic device 100.

As another example, the processor 202 may determine whether a measurement of a time duration associated with the key pressing action of the component, such as the key "P" or any other key on the keyboard 110, or any other buttons, including the first and second volume adjusting buttons 151 and 152, is greater than a predetermined threshold time measurement, based on signals provided by the capacitive sensors 227. If the measurement of the time duration associated with the key pressing action is less than or equal to a predetermined threshold time measurement, the processor 202 may determine that the key pressing action reflects a request to activate the portable electronic device 100.

As another example, the processor 202 may determine whether a predetermined combination of keys/components has been operated (e.g., being pressed and/or held simultaneously or sequentially within a time period), based on signals provided by the capacitive sensors 227 and/or the force sensors 222. If the predetermined combination of keys/components has been operated, the processor 202 may determine that the key pressing action reflects a request to activate the portable electronic device 100.

If the processor 202 determines that the key pressing action reflects a request to activate the portable electronic device 100 (Yes, Step 310), the processor 202 activates the portable electronic device 100 (Step 315). For example, if the portable electronic device 100 is in a sleep state and is locked, the processor 202 may cause the display screen 120 to display a screen prompting the user to enter a password to unlock the portable electronic device 100. A locked state means that the display screen 120 is locked, which prevents the user from accessing apps displayed on the display screen 120. For another example, if the portable electronic device 100 is in a sleep state and is not locked, the processor 202 may cause the display screen 120 to display a screen showing the apps available to the user. The processor 202 may also enable the physical keyboard 110 such that touching or pressing a key triggers an input of characters associated with the corresponding key.

If the processor 202 determines that the key pressing action does not reflect a request to activate the portable electronic device 100 (No, Step 310), the processor 202 may cause the portable electronic device 100 to continue to stay in the low power mode (Step 325). For example, the processor 202 may determine that a measurement of an area associated with the key pressing action is greater than a predetermined threshold area measurement, and that the key pressing action does not reflect a request to wake up the portable electronic device 100. As the portable electronic device 100 continues to stay in the low power mode, the display screen 120 may not be illuminated, and the portable electronic device 100 may not respond to the user's input on the keyboard 110 or the display screen 120 unless the user's input is determined to be an action to activate the portable electronic device 100.

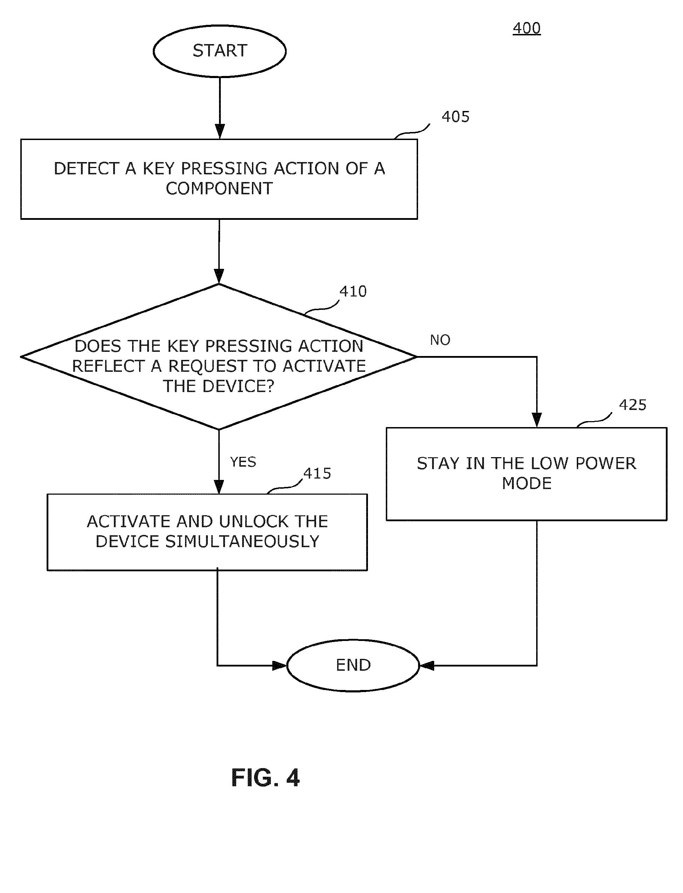

Fig. 4 shows an example process for activating the portable electronic device and unlocking the portable electronic device, consistent with the present disclosure. The portable electronic device may be locked while in a sleep state. In this embodiment, a user presses a component of the portable electronic device 100 to activate the device from the low power mode and to unlock the device in one action.

As shown in Fig. 4, process 400 starts with detecting a key pressing action associated with a component of the portable electronic device 100 (Step 405). In some embodiments, the component of the portable electronic device 100 may be any key on the keyboard 110. The component of the portable electronic device 100 may be any other suitable physical component provided on the portable electronic device 100.

The processor 202 determines, based on the detected key pressing action of a component of the portable electronic device, whether the key pressing action reflects a request to activate the portable electronic device (Step 410). For example, the processor 202 may determine whether a measurement of an area associated with the key pressing action of the component is greater than a predetermined threshold area measurement, based on signals provided by the capacitive sensors 227. For another example, the processor 202 may determine whether the component, such as the key "P" or any other key on the keyboard 110, or any other buttons, including the first and second volume adjusting buttons 151 and 152, has been pressed and held for a predetermined time period (e.g., one second). As another example, the processor 202 may determine whether a predetermined combination of keys/components has been operated (e.g., being pressed and/or held simultaneously or sequentially within a time period).

If the processor 202 determines that the key pressing action reflects a request to activate the portable electronic device 100 (Yes, Step 410), the processor 202 proceeds to activate the portable electronic device 100 and unlock the portable electronic device 100 simultaneously (Step 415). For example, if the portable electronic device 100 is in a sleep state and is locked, the processor 202 activates the device and cause the display screen 120 to display available apps for the user to select and access simultaneously. A user may not need to enter a password in order to unlock the device and access the apps. The processor 202 may also enable the physical keyboard 110 such that touching or pressing a key triggers an input of characters associated with the corresponding key. In some embodiments, the activation of the device and the unlock of the device may be performed sequentially in one user action. For example, if the processor 202 determines that the key pressing action does not reflect a request to activate the portable electronic device 100, the processor 202 may first activate the device and then automatically unlock the device within a predetermined time period. The user may not need to enter a password following the activation of the device since the device is automatically unlocked shortly after the activation.

If the processor 202 determines that the key pressing action does not reflect a request to activate the portable electronic device 100 (No, Step 410), the processor 202 causes the portable electronic device 100 to continue to stay in the low power mode (Step 425). For example, the processor 202 may determine that the measurement of the area associated with key pressing action is greater than a predetermined threshold area measurement, and that the key pressing action does not reflect a request to wake up the portable electronic device 100. As the portable electronic device 100 continues to stay in the low power mode, the display screen 120 may not be illuminated, and the portable electronic device 100 may not respond to the user's input on the keyboard 110 or the display screen 120 unless the user's input is determined to be an action to activate the portable electronic device 100.

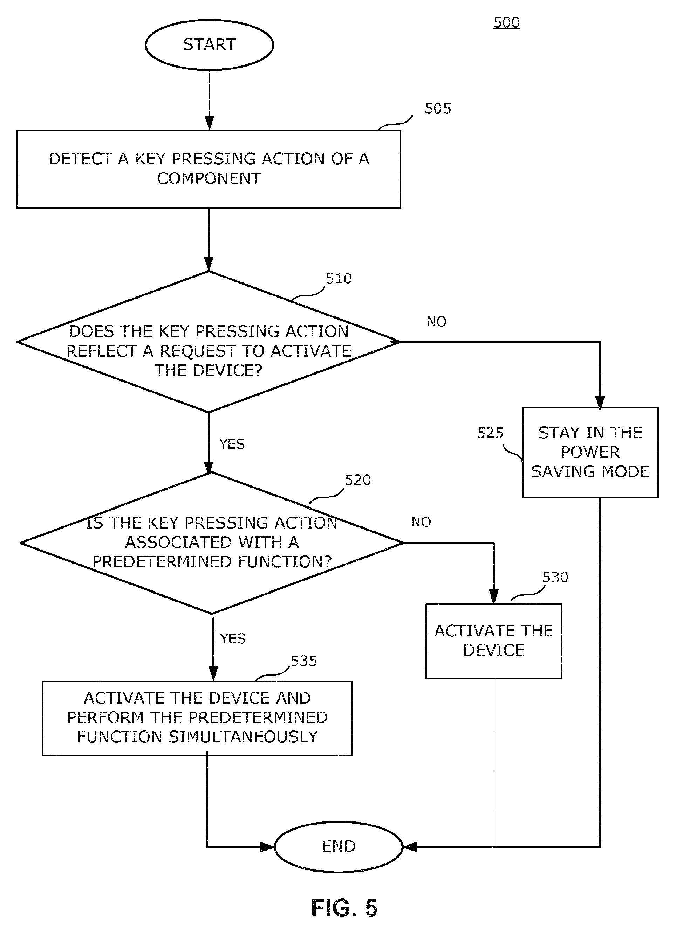

Fig. 5 shows an example process for activating the portable electronic device and performing a predetermined function consistent with the present disclosure. In this embodiment, a user may press a component of the portable electronic device 100 to activate the device from the low power mode and to perform a predetermined function in one action.

As shown in Fig. 5, process 500 starts with detecting a key pressing action associated with a component of the portable electronic device 100 (Step 505). In some embodiments, the component of the portable electronic device 100 may be any key on the keyboard 110. The component of the portable electronic device 100 may be any other suitable physical component provided on the portable electronic device 100.

The processor 202 determines, based on the detected key pressing action of a component of the portable electronic device, whether the key pressing action reflects a request to activate the portable electronic device (Step 510). For example, the processor 202 may determine whether a measurement of an area associated with the key pressing action of the component is greater than a predetermined threshold area measurement, based on signals provided by the capacitive sensors 227. As another example, the processor 202 may determine whether the component, such as the key "P" or any other key on the keyboard 110, or any other buttons, including the first and second volume adjusting buttons 151 and 152, has been pressed and held for a predetermined time period (e.g., one second). As another example, the processor 202 may determine whether a predetermined combination of keys/components has been operated (e.g., being pressed and/or held simultaneously or sequentially within a time period).

If the processor 202 determines that the key pressing action does not reflect a request to activate the portable electronic device 100 (No, Step 510), the processor 202 causes the portable electronic device 100 to continue to stay in the low power mode (Step 525). For example, the processor 202 may determine that the measurement of the area associated with the key pressing action is greater than a predetermined threshold area measurement, and that the key pressing action does not reflects a request to wake up the portable electronic device 100. As the portable electronic device 100 continues to stay in the low power mode, the display screen 120 may not be illuminated, and the portable electronic device 100 may not respond to the user's input on the keyboard 110 or the display screen 120 unless the user's input is determined to be an action to activate the portable electronic device 100.

If the processor 202 determines that the key pressing action reflects a request to activate the portable electronic device 100 (Yes, Step 510), the processor 202 proceeds to check whether the key pressing action of the component is associated with a predetermined function (Step 520). In some embodiments, a predetermined function, such as an operation of opening email inbox, may be configured in connection with a key pressing action of the "m" key or any other key on the keyboard when it is performed by a user's single finger. In some other embodiments, the predetermined function may be configured in connection with a combined key action (e.g., the "m" key being pressed and/or held simultaneously or sequentially within a time period) performed by a user's finger.

If the processor 202 determines that the key pressing action is associated with a predetermined function (Yes, Step 520), the processor 202 proceeds to activate the portable electronic device 100 and perform the predetermined function simultaneously (Step 535). For example, if the portable electronic device 100 is in a sleep state and the key pressing action is associated with a predetermined function to open an email inbox, the processor 202 may activate the device and cause the display screen 120 to display the email inbox simultaneously. In this way, a user may not need to actually launch the email app in order to display the email inbox. As another example, if the portable electronic device 100 is in a sleep state and the key pressing action is associated with a predetermined function to turn on the flashlight of the portable electronic device, the processor 202 may activate the device and cause the flashlight to be turned on simultaneously. In some embodiments, the activation of the device and the predetermined function may be performed sequentially in one user action. For example, if the processor 202 determines that the key pressing action is associated with a predetermined function to turn on the flashlight of the portable electronic device, the processor 202 may first activate the device and then automatically turn on the flashlight of the device within a predetermined time period. The user may not need to launch an app to turn on the flashlight following the activation of the device, since the device is configured to automatically turn on the flashlight shortly after the activation.

If the processor 202 determines that the key pressing action is not associated with any predetermined function (No, Step 520), the processor 202 proceeds to activate the portable electronic device 100 without performing a predetermined function (Step 530). For example, if the portable electronic device 100 is in a sleep state and is locked, the processor 202 may cause the display screen 120 to display a screen prompting the user to enter a password to unlock the portable electronic device 100. As another example, if the portable electronic device 100 is in a sleep state and is not locked, the processor 202 may cause the display screen 120 to display a screen showing the apps available to the user. The processor 202 may also enable the physical keyboard 110 such that touching or pressing a key triggers an input of characters associated with the corresponding key.

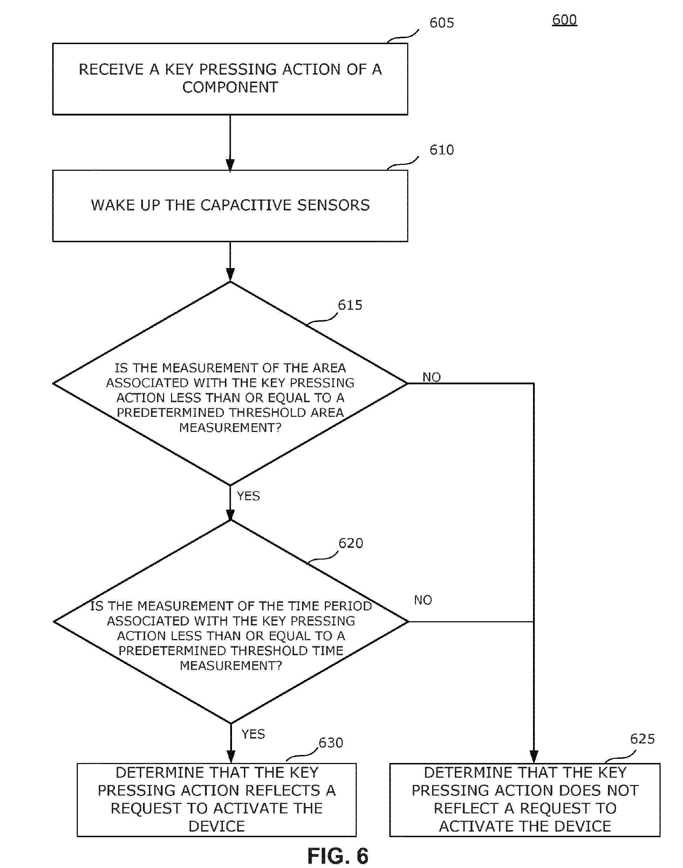

Fig. 6 shows an example process 600 for determining whether a key pressing action reflects a request to activate the portable electronic device consistent with the present disclosure. In this embodiment, the processor 202 determines whether a key pressing action reflects a request to activate the portable electronic device based on signals provided by the capacitive sensors 227. For example, if the capacitive sensors detect a large area of the keyboard has been contacted by an object, the capacitive sensors may generate signals to the processor 202 indicating that the key pressing action does not reflect a request to activate the device. As another example, if the capacitive sensors detect a confined area of the keyboard being contacted by an object and the size of the area being similar to a user's finger, the capacitive sensors may generate signals to the processor 202 indicating that the key pressing action reflects a request to activate the device.

Referring to Fig. 6, process 600 starts with receiving a key pressing action of a component of the portable electronic device 100 (Step 605). In some embodiments, the component of the portable electronic device 100 may be any key on the keyboard 110 (e.g., key "P" on the keyboard 110 or any other key on the keyboard 110 may be used). The component of the portable electronic device 100 may be any other suitable physical component provided on the portable electronic device 100. In some embodiments, a key pressing action may be detected when one or more of the force sensors 222 sense that the key is pressed with a force that is greater than a preset threshold force. In some embodiments, a key pressing action may be detected when a depression of one of the plurality of keys to an extent that is sufficient to engage the physical or electronic dome switch associated with that key.

In some embodiments, while the portable electronic device 100 is in a low power mode, e.g., in a sleep state, the capacitive sensors 227 may be disabled for power conservation. Upon or after receiving the key pressing action, the processor 202 may wake up, or enable, the capacitive sensors 227 to detect features associated with the key pressing action (Step 610). For example, the capacitive sensors 227 may be enabled to detect a measurement of the keyboard area, such as the size of the keyboard area, being contacted or touched by the object performing the key pressing action. As another example, the capacitive sensors 227 may detect the trajectory of movement if the key pressing action is performed in connection with other movement on the keyboard. The capacitive sensors 227 may provide signals to the processor 202 indicating different characteristics detected in connection with the key pressing action.

The processor 202 determines, based on the signals generated by the capacitive sensors 227, whether a measurement of an area associated with the key pressing action is less than or equal to a predetermined threshold area measurement (Step 615). For example, if the area being contacted or touched by the object performing the key pressing action is less than or equal to a predetermined threshold area measurement, the processor 202 determines that the key pressing action reflects a request to activate the device. If the area being contacted or touched by the object performing the key pressing action is greater than a predetermined threshold area measurement, the processor 202 may determine that the key pressing action is not performed by a user's single finger and does not reflect a request to activate the device. In some embodiments, the processor 202 may determine whether the key pressing action reflects a request to activate the device based on both the area being contacted by the object performing the key pressing action and the shape of the area being contacted by the object performing the key pressing action. For example, if the shape of the area being contacted by the object performing the key pressing action is an oval shape and resembles a human's finger, the processor 202 may determine that the key pressing action likely reflects a request to activate the device. For another example, if the shape of the area being contacted by the object performing the key pressing action is a rectangular shape, the processor 202 may determine that the key pressing action likely does not reflect a request to activate the device.

If the processor 202 determines that the measurement of the area associated with the key pressing action is greater than a predetermined threshold area measurement (No, Step 615), the processor 202 determines that the key pressing action does not reflect a request to activate the portable electronic device 100 (Step 625).

If the processor 202 determines that the measurement of the area associated with the key pressing action is less than or equal to a predetermined threshold area measurement (Yes, Step 615), the processor 202 proceeds to determine, based on the signals generated by the capacitive sensors 227, whether a measurement of a time duration associated with the key pressing action is greater than a predetermined threshold time measurement (Step 620). If the time duration that the key is being contacted or touched by the object performing the key pressing action is less than or equal to a predetermined threshold time measurement (Yes, Step 620), the processor 202 determines that the key pressing action reflects a request to activate the device (Step 630). For example, if the processor 202 detects that the length of time the key being contacted by the object after the key being actuated is less than or equal to a predetermined threshold time measurement (for example, 1 second), the processor may determine that the key pressing action reflects a request to activate the device. If the time duration of the key being contacted or touched by the object performing the key pressing action is greater than a predetermined threshold time measurement (No, Step 620), the processor 202 may determine that the key pressing action does not reflect a request to activate the device (Step 625).

It should be noted that although Fig. 6 is described in connection with the key pressing action, process 600 is similarly applicable to other user actions, such as tapping, double tapping, swiping action, etc., to determine whether the actions reflect a request to activate the portable electronic device 100. Further, certain steps may be omitted, or not implemented, without departing from the scope of the present disclosure.

The foregoing description has been presented for purposes of illustration. It is not exhaustive and is not limited to the precise forms or embodiments disclosed.
Modifications and adaptations will be apparent to those skilled in the art from consideration of the specification and practice of the disclosed embodiments. Additionally, although aspects of the disclosed embodiments are described as being stored in memory, one skilled in the art will appreciate that these aspects can also be stored on other types of transitory or non-transitory computer readable media, such as secondary storage devices, for example, hard disks, floppy disks, or CD ROM, or other forms of RAM or ROM, USB media, DVD, or other optical drive media.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A portable electronic device, comprising:
a memory storing instructions; and
a processor executing the instructions to perform operations comprising:
detecting a key pressing action associated with a component of the portable electronic device;
determining that the key pressing action reflects a request to activate the portable electronic device based on a measurement of an area associated with the key pressing action being less than or equal to a predetermined threshold area measurement; and
activating the portable electronic device based on the determination.

2. The portable electronic device of claim 1, wherein the operations further comprise unlocking the portable electronic device based on the determination.

3. The portable electronic device of claim 1, wherein the operations further comprise performing a predetermined function based on the key pressing action associated with the component and the determination.

4. The portable electronic device of claim 3, wherein the predetermined function includes displaying a screen on the portable electronic device showing at least a portion of content of an application.

5. The portable electronic device of claim 1, wherein determining that the key pressing action reflects a request to activate the portable electronic device is further based on a measurement of a time duration associated with the key pressing action being less than or equal to a predetermined threshold time measurement.

6. A computer-implemented method for activating a portable electronic device, the method comprising the following operations executed by a processor:
detecting a key pressing action associated with a component of the portable electronic device;
determining that the key pressing action reflects a request to activate the portable electronic device based on a measurement of an area associated with the key pressing action being less than or equal to a predetermined threshold area measurement; and
activating the portable electronic device based on the determination.

7. The portable electronic device of claim 1 or the method of claim 6, wherein the component of the portable electronic device is associated with a capacitive touch sensor.

8. The portable electronic device or method of claim 7, wherein the capacitive touch sensor is configured to detect the measurement of the area associated with the key pressing action.

9. The method of claim 6, further comprising unlocking the portable electronic device based on the determination.

10. The portable electronic device of claim 2 or the method of claim 9, wherein the unlocking and the activating are performed simultaneously.

11. The method of claim 6, further comprising performing a predetermined function based on the key pressing action associated with the component and the determination.

12. The method of claim 11, wherein the predetermined function includes displaying a screen on the portable electronic device showing at least a portion of content of an application.

13. The method of claim 6, wherein determining that the key pressing action reflects a request to activate the portable electronic device is further based on a measurement of a time duration associated with the key pressing action being less than or equal to a predetermined threshold time measurement.

14. A non-transitory computer-readable medium encoded with instructions that, when executed by a processor, cause the processor to perform operations comprising:
detecting a key pressing action associated with a component of a portable electronic device;
determining that the key pressing action reflects a request to activate the portable electronic device based on a measurement of an area associated with the key pressing action being less than or equal to a predetermined threshold area measurement; and
activating the portable electronic device based on the determination.

15. The portable electronic device of claim 1, the method of claim 6 or the non-transitory computer-readable medium of claim 14, wherein the component is a key on a keyboard of the portable electronic device.
